# EUROPEAN PATENT SPECIFICATION

(11) **EP 4 536 995 B1**
(45) Date of publication and mention of the grant of the patent: **29.07.2026**
(21) Application number: 23731219.4
(22) Date of filing: 06.06.2023
(51) Int. Cl.: F16J 15/00, F16C 33/78, F16C 17/02, F16C 17/04, F16C 17/10, F16C 33/14, F16C 33/20

(54) **MACHINE COMPONENT WITH A COATING AND PROCESS FOR MAKING THE SAME**
MASCHINENKOMPONENTE MIT EINER BESCHICHTUNG UND VERFAHREN ZUR HERSTELLUNG DAVON
COMPOSANT DE MACHINE DOTÉ D'UN REVÊTEMENT ET SON PROCESSUS DE FABRICATION

(30) Priority: 09.06.2022 WO PCT/EP2022/065759
(43) Date of publication of application: 16.04.2025
(73) Proprietor: Aktiebolaget SKF, 415 50 Göteborg (SE)
(72) Inventor: ALLEN, Warrick James David, 1214 AG Hilversum (NL)
(74) Representative: Kohl, Thomas
(86) International application number: PCT/EP2023/065090
(87) International publication number: WO 2023/237538

(56) References cited:
- US-A1- 2021 277 255
- US-B2- 10 184 521
- US-B2- 10 377 917
- US-B2- 8 944 690

## Description

### FIELD OF THE INVENTION

The present invention relates to a machine component having a first tribological surface, which first tribological surface, during machine operation, is adapted to be in contact with a second tribological surface of another machine component, wherein at least part of the first tribological surface is covered with a coating; a process for preparing the coating on at least part of a first tribological surface of a first machine component which, during machine operation, is adapted to be in contact with a second tribological surface of another machine component; and the use of the coating on at least part of a first tribological surface of a first machine component for protecting the first machine component.

### BACKGROUND OF THE INVENTION

In applications where sliding or rolling contact between two tribological surfaces occur in conditions that are not optimal, for example when excessive loads are experienced or with contaminated lubrication causing corrosion, premature wear and fretting of the bearing can occur.

Therefore, in addition to or instead of using a lubricant, it can be beneficial to apply a protective coating to the tribological surface of a machine component that is in contact with another surface. Many different types of coatings exist, and include for instance galvanic coatings, polymer coatings, thermally sprayed coatings and chemically produced coatings.

Two commonly used types of inorganic protective coatings are black oxide coatings and manganese phosphate coatings that are chemically produced. Black oxide coatings are black conversion layers that are formed when the steel is oxidised in controlled caustic conditions to produce specific iron oxide species at the surface. Manganese phosphate coatings are grey to black layers that are formed when a machine component is immersed into a manganese phosphate fluid and the iron in the machine component reacts with the manganese cations and the phosphate anions in the fluid. Although these inorganic protective coatings deliver numerous advantages for bearing performance such as anti-wear, anti-corrosion, and anti-fretting performances, they still leave room for improvement.

An example of a machine element disclosing such a protective coating is shown in US 8 944 690 B2

Object of the present invention is to provide an inorganic protective coating which provides improved rolling performances when compared to known organic protective coatings such black oxide coatings and manganese phosphate coatings.

### SUMMARY OF THE INVENTION

It has now been found that this object can be realized when use is made of a particular additional coating layer which is applied onto a conventional coating layer.

Accordingly, the present invention relates to a machine component having a first tribological surface, which first tribological surface, during machine operation, is adapted to be in contact with a second tribological surface of another machine component, wherein at least part of the first tribological surface is covered with a coating which comprises a first coating layer and a second coating layer, wherein the first coating layer comprises an inorganic protective coating composition which is a chemically produced coating composition which comprises black oxide or manganese phosphate and the second coating layer comprises an organically modified silane composition, wherein the organically modified silane used in the organically modified silane composition contains one or more amine groups, wherein the first coating layer is in direct contact with at least part of the first tribological surface, and wherein the second coating layer is in direct contact with at least part of the first coating layer.

Preferably, the protective coating composition comprises black oxide.

In another preferred embodiment, the inorganic protective coating composition comprises manganese phosphate (Mn₃(PO₄)₂).

The second coating layer to be used in accordance with the present invention has suitably a thickness in the range of from 25-500 nm, preferably in the range of from 25-250 nm, more preferably in the range of from 50-200 nm, and most preferably in the range of from 50-150 nm.

The use of the second coating layer results in an improved bearing performance. In case the inorganic protective coating composition comprises one or more iron oxides (i.e. black oxide), the use of the second coating layer results in an improved run-in process in the sense that it generates less noise and friction when compared with a coating which is made only of black oxide. In addition, the second coating layer improves oil adhesion, and thus the lubricating performance after the run-in. In that case a relatively smooth coating surface is obtained.

In case the inorganic protective coating composition comprises manganese phosphate (Mn₃(PO₄)₂). the use of the second coating layer results in improved wear resistance, friction reduction and corrosion resistance. When using the organically modified silane in accordance with the present invention a longer running time can be established. The surface of the manganese phosphate crystals will be covered with the organically modified silane, whereby the organically modified silane containing one or more amino groups will act as an elastomeric binder which holds the manganese phosphate crystals together, ensuring an improved retention of manganese phosphate crystals during use and lubricant adhesion, and thus resulting in improved wear resistance, friction reduction and corrosion resistance. Further, at least part of the organically modified silane will penetrate the porous structure of the first coating layer comprising manganese phosphate crystals, thereby also providing a binder coating layer between manganese phosphate crystals that are not immediately arranged at the outer surface of the first coating layer. Such internal binding in the porous structure of the manganese phosphate-containing first coating layer further contributes to the high retention of the manganese phosphate crystals in the first coating layer, and thus contributes to an improved performance.

Hence, in a preferred embodiment of the present invention the inorganic protective coating composition in the first coating layer comprises manganese phosphate, wherein at least part of the second coating layer which comprises the organically modified silane that contains one or more amino groups covers the outer surface of the first coating layer, and wherein at least part of said second coating layer has penetrated an internal part of the first coating layer.

In accordance with the present invention the organically modified silane used in the organically modified silane composition contains one or more amino groups. Preferably, the organically modified silane contains two or more amine groups. More preferably, the organically modified silane contains two amine groups. The organically modified silanes containing one or more amino groups have the advantage that they show an improved adhesion to the first coating which comprises a protective coating, resulting in improved performances in terms of anti-wear, anti-corrosion and anti-fretting performances over a longer period of time. The one or more amino groups will create a strong coordination bond to metal ions such as manganese ions (Mn²⁺) and iron ions (Fe²⁺ and Fe³⁺). In addition, the one or more amino groups improve the corrosion inhibiting properties of the coating. Hence, the organically modified silanes containing one or more amino groups will perform more attractively when compared with organically modified silanes that do not contain amino groups and that require organic solvents such as for instance 1,2-bis(triethoxysilyl) ethane and triethoxysilyl propoxy(polyethyleneoxy) dodecanate.

Preferably, the organically modified silane which is used in the organically modified silane composition to be used in accordance with the present invention is water-soluble. Suitably, the organically modified silane to be used in the organically modified silane composition has a R-Si-(OX)₃ structure, in which R is an organofunctional group, and X is independently hydrogen or an alkyl group, preferably a methyl or ethyl group. The first, second and third X can be the same or different. For instance, the first and second X can be the same, whereas the third X differs from the first and second X. Preferably, the first, second and third X are all the same. More preferably, X is hydrogen (i.e. the first, second and third X are hydrogen).

Suitably, R contains 1-50 carbon atoms, preferably 5-20 carbon atoms. R contains one or more amine groups. R may also contain one or more unsaturated C-C bonds. Preferably, R contains two or more amine groups. More preferably, R contains two amine groups. The organically modified silane is suitably selected from the group of monomers or oligomers consisting of 4-aminobutyltriethoxysilane, 4-amino-3,3-dimethylbutyltrimethoxysilane, 4-amino-3,3-dimethylbutylmethyldimethoxysilane, 3-aminopropylmethyldiethoxysilane, N-(2-aminoethyl)-3-aminopropyltrimethoxysilane, N-(2-aminoethyl)-3-aminoisobutylmethyldimethoxysilane, N(2-aminoethyl)-3-aminopropylmethyldiethoxysilane, N(2-aminoethyl)-3-aminopropylethyldimethoxysilane, (trimethoxysilylpropyl)diethylenetriamine, 3-(N-allylamino)propyltrimethoxysilane, n-butylaminepropyltrimethoxysilane, (3-N-ethylamino)isobutylmethyldiethoxysilane, (3-(N-ethylamino)isobutyltriethoxysilane, N-methylaminopropylmethyldimethoxysilane, N-methylaminopropyltrimethoxysilane, 3-(N,N-dimethylaminopropyl)aminopropylmethyldimethoxysilane, N-(2-aminoethyl)-3-aminopropyltriethoxysilane, 3-aminopropyltriethoxysilane, 3-aminopropyltrimethoxysilane, N-(2-aminoethyl)-3-aminopropylsilanetriol, N-(2-aminoethyl)-3-aminoisobutyldimethylsilane triol, n-butylaminopropylsilanetriol, 4-aminobutylsilanetriol, 4-amino-3,3,dimethylbutylsilanetriol, 3-aminopropylsilanetriol, N-(2-aminopropyl)-3-aminopropylsilanetriol, 3-mercaptopropylsilanetriol, aminoethyl silsesquioxane, aminoethyl aminopropyl silsesquioxane, N-(2-aminoethyl)-3-aminopropylsilanetriol, and N-(2-aminoethyl)-3 -aminoethylsilanetriol.

As indicated before, in the organically modified silane to be used in accordance with the present invention, X is preferably hydrogen. Preferably, the organically modified silane is selected from the group consisting of aminoethyl silsesquioxane, aminoethyl aminopropyl silsesquioxane and N-(2-aminoethyl)-3-aminopropylsilanetriol. More preferably, the organically modified silane is aminoethyl-aminopropyl silsesquioxane or N-(2-aminoethyl)-3-aminopropylsilanetriol. Most preferably, the organically modified silane which is used in the organically modified silane composition is N-(2-aminoethyl)-3-aminopropylsilanetriol. Also mixtures of organically modified silanes can be used. An Example of such a mixture comprises aminoethyl-aminopropyl silsesquioxane and N-(2-aminoethyl)-3-aminopropylsilanetriol.

The organically modified silane composition may comprises an organically modified silane, whereby one or more of the amino groups of the organically modified silane has reacted with another chemical compound such for example an ester to provide the coating with particular surface properties.

In case the first coating layer comprises manganese phosphate (Mn₃(PO₄)₂). the one or more functional groups that are present in the R group of the organically modified silane, such as one or more amine groups and/or sulphuric acid groups, are able to form coordinating structures with the manganese cations, ensuring that the second coating layer is firmly bound to the first coating layer, thus providing a very stable coating with an improved adhesion behaviour and thus bearing performance in terms of wear reduction and corrosion resistance.

The first coating layer is in direct contact with at least part of the first tribological surface of the machine component. Preferably, the first coating layer is in direct contact with more than 75% of the first tribological surface, preferably more than 95% of the first tribological surface. Most preferably, the entire first tribological surface is covered with the first coating layer. Suitably, the second coating layer is in direct contact with at least part of the first coating. Preferably, the second coating layer is in direct contact with more than 75% of the first contact layer, more preferably more than 95% of the first contact layer. Most preferably, the entire first coating layer is covered with the second coating layer.

The present invention also provides a process for preparing a coating on at least part of a first tribological surface of a first machine component which, during machine operation, is adapted to be in sliding contact with a second tribological surface of another machine component, which process comprises the steps of:
(a) applying a first coating layer onto at least part of the first tribological surface, which first coating layer comprises an inorganic protective coating composition which is a chemically produced coating composition which comprises one or more iron oxides or manganese phosphate, and whereby the first coating is in direct contact with at least part of the first tribological layer;
(b) applying a second coating layer onto at least part of the first coating layer, which second coating layer comprises an organically modified silane, wherein the organically modified silane used in the organically modified silane composition contains one or more amine groups, and whereby the second coating layer is in direct contact with at least part of the first coating layer; and
(c) allowing the second coating to cure.

In accordance with the present invention the organically modified silane used in the organically modified silane composition contains one or more amino groups. These organically modified silanes containing one or more amino groups enable a very attractive process for preparing the coating which comprises the first and second coating layers in accordance with the present invention. The one or more amino groups that are present in the organically modified silane enable that the curing of the second coating layer can be carried out at room temperature (i.e. avoiding the use of an oven) and during relative short curing periods. Another advantage of the use of an organically modified silane that contains one or more amino groups is that the organically modified silane can be applied in the form of an aqueous solution onto at least part of the first coating layer, and that no organic solvents need to be used, resulting in an environmentally friendly and safe manufacturing process. An additional advantage is the fact that the aqueous solution of the organically modified silane containing one or more amino groups displays an improved stability when compared with organically modified silanes that do not contain amino groups and that require organic solvents such as for instance 1,2-bis(triethoxysilyl) ethane and triethoxysilyl propoxy(polyethyleneoxy) dodecanate. This means that the aqueous solutions of the organically modified silanes that contain one or more amino groups can be stored for longer until needed.

In step (a), the first coating layer is applied into at least part of the first tribological surface of the machine component. Preferably, the first coating layer is applied onto more than 75% of the first tribological surface, preferably more than 95% of the first tribological surface. Most preferably, the first coating layer is applied onto the entire first tribological surface. In step (b), the second coating is applied onto at least part of the first coating layer. Preferably, the second coating layer is applied onto more than 75% of the first contact layer, preferably more than 95% of the first contact layer. Most preferably, the second coating layer is applied onto the entire first coating layer.

Step (a) is carried out under conditions which are commonly used to apply inorganic protective layers on a tribological surface of a machine component. Such methods include conversion coating by chemical immersion, vacuum deposition including PVD techniques (Physical Vapour Deposition), Thermal Spray and Kinetic Spray techniques.

In accordance with the present invention, in step (b), the organically modified silane can suitably be applied onto at least part of the first coating layer by means of a dip coating, contact coating, roller coating or spray coating process. The polymer formulation is preferably applied onto at least part of the first coating layer by means of spray, spin or dip coating process or a combination of these.

The organically modified silane can be any one of those described here above. Preferably, in the organically modified silane to be used X is hydrogen. Organically modified silanes in which X is hydrogen have the advantage that they are water soluble and that the use of organic and environmentally unfriendly solvents can be avoided. Therefore, in step (b) the organically modified silane is preferably in the form of an aqueous solution which is applied onto at least part of the first coating layer.

Step (b) is suitably carried out for a period of time in the range of from less than minute minute to 15 minutes and a temperature in the range of from 5 - 80°C. Preferably, step (b) is carried out for a period of time in the range of from less than a minute to 5 minutes and at a temperature in the range of from 15-35°C.

When in step (b) an aqueous solution is used which contains the organically modified silane in which X is hydrogen, the organically modified silane is present in an amount in the range of 0.1-25 wt%, preferably in the range of 0.5-5 wt%, based on the total weight of the aqueous solution.

When X is an alkyl group such as a methyl group or ethyl group, use is made of an organic solution in which the organically modified silane is dissolved in a solvent. In that case the organically modified silane is present in an amount in the range of 0.1-20 wt%, preferably in the range of 0.5-5 wt%, based on the total weight of the organic solution.

Suitably, the solvent is a polar organic solvent. The polar solvent may be a polar aliphatic solvent or polar aromatic solvent, such as an alcohol, a ketone, ester, acetate, glycol ethers, aprotic amide, aprotic sulfoxide, or aprotic amine. Examples of useful solvents include methyl ethyl ketone, methyl isobutyl ketone, m-amyl acetate, ethylene glycol butyl ether-acetate, propylene glycol monomethyl ether acetate, xylene, n-methylpyrrolidone, or blends of aromatic hydrocarbons. Suitable alcohols include ethanol, isopropanol, n-butanol, and n-propanol. Suitable acetates include hexyl acetate, octyl acetate, and glycol ether acetates such as propylene glycol monomethyl ether acetate. Suitable ketones include methyl propyl ketone, methyl isobutyl ketone, and methyl hexyl ketone. Glycol ethers and glycol ether acetates are especially preferred. An acidic or basis catalyst may also be added. Further, the solvent may include non-polar aromatic and/or aliphatic solvents.

Step (c) is suitably carried out for a period of time in the range of from 3-30 days and a temperature in the range of from 5-80°C. Preferably, step (d) is carried out for a period of time in the range of from 7-21 days and at a temperature in the range of from 15-30°C. Step (c) will allow the coating to cure by way of drying. Once the second coating has been cured, the first component will be ready for use.

The present invention also relates to the use of a coating on at least part of a first tribological surface of a first machine component for protecting the first machine component, which first tribological surface, during machine operation, is adapted to be in contact with a second tribological surface of another machine component, which coating comprises a first coating layer and a second coating layer, wherein the first coating layer comprises an an inorganic protective coating composition which is a chemically produced coating composition which comprises one or more iron oxides or manganese phosphate and the second coating layer comprises an organically modified silane, wherein the organically modified silane used in the organically modified silane composition contains one or more amine groups, wherein the first coating layer is in direct contact with at least part of the first tribological surface, and wherein the second coating layer is in direct contact with at least part of the first coating layer. Preferably, the present coating is also used on at least part of the second tribological surface of the other machine component.

The use of the coating comprising the first coating layer and the second coating layer in accordance with the present invention provides attractive performances in rolling applications in which high contact pressures are required between the tribological surfaces of machine components to establish sufficient hydrodynamic lubrication.

Therefore, in a preferred embodiment, the present invention relates to the use of a coating on at least part of a first tribological surface of a first machine component for protecting the first machine component in rolling applications, which first tribological surface, during machine operation, is adapted to be in rolling contact with a second tribological surface of another machine component, which coating comprises a first coating layer and a second coating layer, wherein the first coating layer comprises an protective coating composition comprising a manganese phosphate and the second coating layer comprises an organically modified silane, wherein the organically modified silane used in the organically modified silane composition contains one or more amine groups, wherein the first coating layer is in direct contact with at least part of the first tribological surface, and wherein the second coating layer is in direct contact with at least part of the first coating layer.

Preferably, the present coating is also used on at least part of the second tribological surface of the other machine component.

The present invention also relates to a machine comprising a first machine component on which a coating is formed using a process according to the present invention and a second machine component which is in contact with the first machine component.

The machine in accordance with the present is suitably an enclosed machine in which the first machine component and the second machine component are not exposed to external conditions such as weather conditions.

In one embodiment the first machine component and the second machine components form part of a dynamic sealing assembly comprising a dynamic seal having a contact lip that bears against a counterface. The counterface can be a surface of a shaft, or of a part fixedly mounted to the shaft such as a flinger or a bearing inner ring, that is rotational relative to the seal. In a further example, the counterface is a surface of a cylinder housing or piston that is linearly displaceable relative to the seal. The coating may be provided on a contact surface of the seal lip and/or on the counterface.

The dynamic seal may thus be used to seal passages between machine components that move relative to each other, either linearly or in the circumferential direction. The dynamic seal may be, for example, a lip seal of a rolling element bearing, an engine seal (such as, for example, a valve stem seal, a crankshaft seal or a shaft seal), an O-ring seal, a steering seal, a suspension seal, a piston seal, a wheel end seal, a power transmission seal, a pneumatic seal, a hydraulic seal, a fluid handing seal or an aerospace shaft seal.

In a further embodiment, the first and second machine components form part of a plain bearing assembly. In one example, the plain bearing assembly is a radial assembly comprising oppositely oriented radial surfaces in sliding contact with each other, for supporting and transmitting radial loads. One of the first and second components is an inner component, such as a shaft, or a part fixedly mounted to the shaft such as a sleeve, bushing or the inner ring of a plain bearing. The other of the first and second components is an outer component, such as a housing or a part that is fixedly mounted to the housing, such as the outer ring of a plain bearing or a sleeve or bushing. The coating may be provided on a radially outer surface of the inner component and/or on a radially inner surface of the outer component. In a further example, the plain bearing assembly is a thrust bearing assembly comprising oppositely oriented axial surfaces in sliding contact with each other, whereby the coating is provided on one or both axial surfaces.

The first machine component can suitably be derived from an iron containing material such as selected from the group consisting of chrome steels and stainless steels. Examples of suitable stainless steels include martensitic grades such as 410 and 410H, austenitic grades such as 304 and 316, ferritic grades such as 410S, duplex grades such as 2205 and precipitation hardened grades such as 17-4 PH. Preferably, the first machine component is made of steel.

A coating prepared in accordance with the invention may also be used advantageously in rotary sealing applications.

In an alternative embodiment, the outer surface of the shaft or of a sleeve mounted to the shaft is provided with the coating.

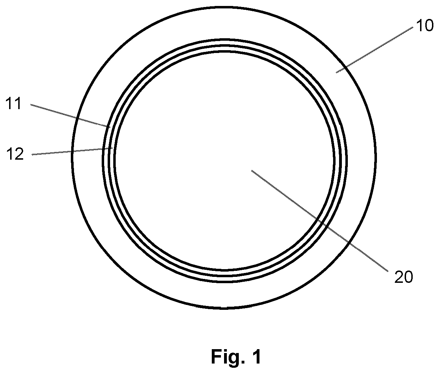

In Figure 1, a machine component in accordance with the present invention has been shown which comprises an outer sliding element 10 of a sliding bearing as the machine component, a first coating layer 11, a second coating 12, and an inner sliding element 20 of the sliding bearing as the another machine component.

Advantages of the invention will become apparent from the following examples.

### Examples

### Example 1

### Water based sol-gel coating on Manganese phosphate coated steel part

The silane 2-aminoethyl-3-aminopropyl silanetriol was obtained as a 25wt% concentrate in water (Gelest Inc.). It was then diluted in tap water to reach a concentration of 1% by volume and mixed thoroughly to make the sol-gel treatment solution.

Several flat steel ring (diameter ~5cm) made from grade 3 steel that had been previously surface treated to produce a Mn phosphate coating were thoroughly cleaned; once by immersion in 2-propanol and twice by immersion in 2-butanone (HPLC grade) followed by an additional rinse in the same grade of 2-butanone. The sample rings were then left to dry.

The cleaned phosphated steel ring was then immersed briefly in the sol-gel solution and then steadily removed at a rate of approximately 2 cm per second. The ring was held above the dip solution until most of the wet coating was removed by gravity then placed onto a flat surface to dry at room temperature for 2 weeks.

A contact angle with deionized water between 65° - 70° was achieved, showing a considerably increased hydrophobicity versus a clean and uncoated Mn phosphate steel par that had a contact angle of less than10°The increased hydrophobicity is a clear indication of increased wear resistance.

### Example 2

### Solvent based sol-gel coating on black oxide coated steel part

A mixture of deionized water (10ml) and 2-propanol (70ml) were added to a glass beaker and stirred continuously with a magnetic stirrer bar. 2 drops of acetic acid (dilute) were then added followed by 0.4 ml of the silane 1,2-bis(triethoxysilyl) ethane (96% purity, Merck KGaA) and 2.0 ml of the silane triethoxysilyl propoxy(polyethyleneoxy) dodecanoate (Gelest Inc, 95%). The solution was heated to approximately 60°C for 1 hour and left to cool with continued stirring throughout the mixing and reaction.

Several flat steel rings (diameter ~5cm) made from grade 3 steel that had been previously surface treated to produce a Black Oxide coating were thoroughly cleaned; once by immersion in 2-propanol and twice by immersion in 2-butanone (>99.9%) followed by an additional rinse in the same grade of 2-butanone. The sample rings were then left to dry.

The cleaned black oxide treated steel ring was then immersed briefly in the sol-gel solution and then steadily removed at a rate of approximately 2cm per second. The ring was held above the dip solution until most of the wet coating was removed by gravity then placed flat for 5 minutes for initial drying followed by heating in an oven for 1 hour at 100°C.

The resulting coated part had a slightly darker appearance than an uncoated ring with a contact angle with deionized water of approximately 65°, showing the increased hydrophobicity versus a cleaned, uncoated black oxide ring that had a contact angle of approximately 0° with deionized water.

### Example 3

### Water based sol-gel coating on black oxide coated steel part

The sol-gel made using Example 1 was also applied to a cleaned black oxide treated grade 3 steel ring using an identical cleaning and processing used for experiment 2.

A contact angle with deionized water of approximately65° was achieved, whereas with a clean and uncoated steel part a contact angle of approximately 0° was obtained with deionized water.

### Example 4

### Emulsion method of sol-gel coating on manganese phosphate coated steel part

0.4 ml of The silane 1,2-bis(triethoxysilyl) ethane (96% purity, Merck KGaA), 2.0ml of the silane triethoxysilyl propoxy(polyethyleneoxy) dodecanoate (Gelest Inc, 95%) and 2 drops of dilute acetic acid were added to 50ml of deionized water with vigorous stirring using magnetic bar. Approximately 2ml of an aqueous solution containing Polaxomer 407 surfactant was added to give approximately0.1% w/w concentration in the final mixture with vigorous stirring maintained until a cloudy emulsion of silane droplets in water was achieved.

A Mn phosphate treated ring was cleaned using the same process as for Example 1. A portion of the emulsion/suspension produced above was poured onto the cleaned Mn phosphate coated ring and the excess poured away. The coated ring was then placed in an oven at 100°C for 1 hour to produce a cured coating that produced a contact angle of a contact angle of approximately 45° with deionised water after cooling, , whereas with a clean and uncoated steel part a contact angle of approximately 0° was obtained with deionized water.

Examples 1-4 clearly show that the use of the second coating layer in accordance with the present invention results in a significantly improved hydrophobicity, which in turn will establish a considerable increase in wear and corrosion resistance.

### Example 5

### Water immersion rust resistance test of a water based sol-gel coating on a Mn phosphate steel part

The sol-gel coating made in Example 1 using 2-aminoethyl-3-aminopropyl silanetriol on the Mn phosphate ring that was also previously tested for MTM tribology testing was cleaned and placed into a beaker of tap water and maintained at 70°C for 4 days. A reference ring with Mn phosphate but with no sol-gel treatment also previously tested identical way for its tribology using an MTM was placed into a separate beaker of water with identical conditions at the same time. The parts were then removed after this 4 day period and gently dried and the parts were then examined for rust corrosion. The sol-gel coated sample showed very little red rust compared to the reference sample without sol-gel coating, which showed much more red coloration from iron rust. SEM with EDS (Energy Dispersive X-Ray Spectroscopy) was also used to confirm the increase in oxygen levels in the more rusted areas of the reference sample without sol-gel treatment.

### Example 6

### Potentiodynamic measurements of a solvent sol-gel treated manganese phosphate coated part

The potentiodynamic polarization was performed in a double jacketed cell using a three-electrode system.. The steel specimen was acting as a working electrode. A platinum electrode was used as auxiliary electrode and the silver/silver chloride was used as a reference electrode. The reference electrode was inserted in a lugging capillary to minimize the electrical potential difference between the two ends of a conducting phase during a current flow.

The experiments were performed in 3.5 wt% NaCl solution with continuously purging of nitrogen gas at two temperatures (21 and 60 °C) using VersaSTAT 3F Potentiostat Galvanostat from AMETEK. The steel specimen was dipped into the 3.5% NaCl solution for 180 minutes to achieve the steady state before each experiment. The potentiodynamic anodic and cathodic polarization plots were attained from -1200 mV versus reference electrode to +700 mV versus reference electrode potential at a scan rate of 0.0833 mV/s.

The following values were obtained for the Mn phosphate plate coated with sol-gel from Example 2 (containing triethoxysilyl propoxy(polyethyleneoxy) dodecanoate and bis(triethoxysilyl) ethane). One reading was taken with after the sol-gel was taken directly after heat treatment with no cleaning and another with the sol-gel coating cleaned to remove any residue that may obscure the real value associated with the solid sol-gel coating formed. This successfully demonstrated that the sol-gel coating provides a much lower I_{corr}, suggesting it would provide a useful improvement in corrosion resistance.

These results are shown in Table 1.

**Table 1**

| Sample | E_{corr} (mV) | I_{corr} (µA) | Pᵢ (%) |
|---|---|---|---|
| Mn phosphate reference | -694 | 1.428 | - |
| Mn phosphate + sol-gel (no cleaning after deposition) | -682 | 0.090 | 93.7 |
| Mn phosphate + sol-gel (cleaned after deposition) | -431 | 0.308 | 78.5 |

### Example 7

### Tribology of solvent based sol-gel coating on a black oxide coated part

The tribological behaviour of the solgel made from Example 1 was studied using a Mini-Traction Machine (MTM2). The MTM is a ball on disc tester from PCS Instruments. The contact pressures, speeds and temperature that can be achieved in the MTM2 contact were similar to those found in gears, rolling element bearings and cams.

The ball used was a super finished AISI 52100 (535A99) test ball, R_{q} 10 nm. The sol-gel on black oxide and black oxide treated steel disks were of grade 3 steel with intial R_{q} 250 nm of the uncoated steel. A formulated mineral oil (Lukoil Genesis 0W20) was used for each experiment.

Table 2 displays the parameters used to study friction and tribofilm formation. Stribeck and duration tests were done, and each test was repeated twice to check the reproducibility of the results.

**Table 2**

| **Test Type** | **Contact Pressure** | **Load** | **Temperature** | **SRR%** | **Speed** | **λ** |
|---|---|---|---|---|---|---|
| | P₀, (GPa) | (N) | (°C) | | (mm/s) | |
| Stribeck | 1.28 | 75 | 40 | 5 | variable | variable |
| Duration | 1.28 | 75 | 40 | 5 | 800 | 1.1 |

Table 3 shows the lower friction which was established during the initial, running-in phase of the test.

**Table 3**

| **Ball** | **Washer** | **Load** (N) | **Distance** (m) | **Initial friction** | **Steady State friction** |
|---|---|---|---|---|---|
| Black Oxide | Black Oxide | 75 | 144 | 0.045 - 0.065 | 0.040 - 0.045 |
| Black Oxide | Sol-gel coated Black Oxide | 75 | 144 | < 0.05 | 0.04- 0.045 |

### Example 8

### Deposition onto a cylindrical bearing unit

The water based sol-gel treatment made using the same process as Example 1 was also deposited onto a cleaned Mn phosphate treated cylindrical roller bearing of 10mm diameter x 20 mm length. The part was cleaned and coated using the same process and gave a very similar contact angle when fully cured and appeared to be of good quality and uniformity.

### Example 9

### Tribology of water based sol-gel coating on a manganese phosphate coated part

Tribological behaviour of the water based sol-gel produced on manganese phosphate from the sol-gel made in Example 1 was also studied using the same MTM (Mini Traction Machine) used in Example 7. Stribeck testing was performed on samples and compared to reference samples of manganese phosphate coatings without sol-gel treatment.

A sequence of 6 Stribeck steps were programmed with speed varied between 50-2500 mm/s from high speed to low speed and the reverse 3 times with test parameters shown in Table 4. Average traction coefficients were then measured during 3 duration steps of 5 minutes each with different speeds and/or Spin to Roll Ratio, shown in Table 5. The test results are shown in Table 6.

**Table 4 - Test Conditions for friction tests**

| **Contact Pressure** | **Load** | **Temperature** | **SRR%** | **Speed** |
|---|---|---|---|---|
| P₀, (GPa) | (N) | (°C) | | (mm/s) |
| 1.28 | 75 | 90 | 50-190 | variable |

**Table 5 - Description of each step**

| **Parameter** | **Step 1** | **Step 2** | **Step 3** |
|---|---|---|---|
| Speed (mm/s) | 500 | 500 | 150 |
| SRR (%) | 50 | 100 | 100 |

**Table 6 - Results**

| **Sample** | **Traction coefficient** | | |
|---|---|---|---|
| | **Step 1** | **Step 2** | **Step 3** |
| Mn phosphated steel | 0.12 | 0.12 | 0.12 |
| Sol-gel coated Mn phosphated steel | 0.10 | 0.10 | 0.11 |

After testing was completed the profile of each wear track that was in tribological contact was measured and the maximum wear depth was recorded (see Table 7)

**Table 7 - Wear depth of samples**

| **Sample** | **Wear depth (µm)** |
|---|---|
| Reference Mn phosphated steel | 6.1 (average) |
| Sol-gel on Mn phosphated steel | 2.8 |

From Table 7 it is clear that the use of the sol-gel coated on the Mn phosphate steel considerable decreased the wear depth, which shows that the sol-gel performs as a binder which allows that much less manganese phosphate crystals will be lost from the first coating layer during operation.

**In** addition, the water-based sol-gel used in Example 1 could be stored during one month without showing any precipitation, whereas the solvent-based sol-gel used in Example 2 already showed clear precipitation after 2.5 days storage.

Examples 5-9 also show that the second coating layer used in accordance with the present invention establishes improved anti-corrosion and anti-fretting properties when compared with embodiments in which only the first coating layer is used.

## Claims

1. A machine component having a first tribological surface, which first tribological surface, during machine operation, is adapted to be in contact with a second tribological surface of another machine component, wherein at least part of the first tribological surface is covered with a coating which comprises a first coating layer and a second coating layer, wherein the first coating layer comprises an inorganic protective coating composition which is a chemically produced coating composition which comprises black oxide or manganese phosphate and the second coating layer comprises an organically modified silane composition, wherein the organically modified silane used in the organically modified silane composition contains one or more amine groups, wherein the first coating layer is in direct contact with at least part of the first tribological surface, and wherein the second coating layer is in direct contact with at least part of the first coating layer.

2. The machine component according to claim 1, wherein the organically modified silane used in the organically modified silane composition is water-soluble.

3. The machine component according to claim 1 or 2, wherein the organically modified silane is selected from the group consisting of aminoethyl silsesquioxane, aminoethyl aminopropyl silsesquioxane and 2-aminoethyl-3-aminopropyl-silanetriol.

4. The machine component according to claim 3, wherein the organically modified silane is aminoethyl-aminopropyl silsesquioxane or 2-aminoethyl-3-aminopropyl-silanetriol.

5. The machine component according to any one of claims 1-4, wherein the second coating layer has a thickness in the range of from 25-500 nm.

6. The machine component according to any one of claims 1-7, wherein the inorganic protective coating composition comprises manganese phosphate.

7. A process for preparing a coating on at least part of a first tribological surface of a first machine component which, during machine operation, is adapted to be in contact with a second tribological surface of another machine component, which process comprises the steps of:
(a) applying a first coating layer onto at least part of the first tribological surface, which first coating layer comprises an inorganic protective coating composition which is a chemically produced coating composition which comprises one or more iron oxides or manganese phosphate , and whereby the first coating is in direct contact with at least part of the first tribological layer;
(b) applying a second coating layer onto at least part of the first coating layer, which second coating layer comprises an organically modified silane which contains one or more amine groups, and whereby the second coating layer is in direct contact with at least part of the first coating layer; and
(c) allowing the second coating to cure.

8. The process according to claim 7, wherein in step (b) the organically modified silane in the form of an aqueous solution is applied onto at least part of the first coating layer.

9. The process according to claim 7 or 8, wherein the organically modified silane is selected from the group consisting of aminoethyl silsesquioxane, aminoethyl aminopropyl silsesquioxane and 2-aminoethyl-3-aminopropyl-silanetriol.

10. The process according to claim 9, wherein the organically modified silane is aminoethyl-aminopropyl silsesquioxane or 2-aminoethyl-3-aminopropyl-silanetriol.

11. The process according to any one of claims 7-10, wherein the
inorganic protective coating composition comprises manganese phosphate.

12. Use of a coating on at least part of a first tribological surface of a first machine component for protecting the first machine component, which first tribological surface, during machine operation, is adapted to be in contact with a second tribological surface of another machine component, which coating comprises a first coating layer and a second coating layer, wherein the first coating layer comprises an inorganic protective coating composition which is a chemically produced coating composition which comprises one or more iron oxides or manganese phosphate and the second coating layer comprises an organically modified silane which contains one or more amine groups, wherein the first coating layer is in direct contact with at least part of the first tribological surface, and wherein the second coating layer is in direct contact with at least part of the first coating layer.

13. Use according to claim 12 in rolling applications, wherein the first tribological surface, during machine operation, is adapted to be in rolling contact with the second tribological surface, and wherein the the inorganic protective coating composition comprises manganese phosphate.

## Patentansprüche

1. Maschinenkomponente mit einer ersten tribologischen Oberfläche, wobei die erste tribologische Oberfläche dafür ausgelegt ist, sich während des Maschinenbetriebs mit einer zweiten tribologischen Oberfläche einer anderen Maschinenkomponente in Kontakt zu befinden, wobei wenigstens ein Teil der ersten tribologischen Oberfläche mit einer Beschichtung bedeckt ist, die eine erste Beschichtungsschicht und eine zweite Beschichtungsschicht umfasst, wobei die erste Beschichtungsschicht eine anorganische Schutzbeschichtungszusammensetzung umfasst, die eine chemisch hergestellte Beschichtungszusammensetzung ist, die Schwarzoxid oder Manganphosphat umfasst, und die zweite Beschichtungsschicht eine organisch modifizierte Silanzusammensetzung umfasst, wobei das in der organisch modifizierten Silanzusammensetzung verwendete organisch modifizierte Silan eine oder mehrere Amingruppen enthält, wobei sich die erste Beschichtungsschicht in direktem Kontakt mit wenigstens einem Teil der ersten tribologischen Oberfläche befindet und wobei sich die zweite Beschichtungsschicht in direktem Kontakt mit wenigstens einem Teil der ersten Beschichtungsschicht befindet.

2. Maschinenkomponente nach Anspruch 1, wobei das in der organisch modifizierten Silanzusammensetzung verwendete organisch modifizierte Silan wasserlöslich ist.

3. Maschinenkomponente nach Anspruch 1 oder 2, wobei das organisch modifizierte Silan ausgewählt ist aus der Gruppe bestehend aus Aminoethylsilsesquioxan, Aminoethylaminopropylsilsesquioxan und 2-Aminoethyl-3-aminopropylsilantriol.

4. Maschinenkomponente nach Anspruch 3, wobei das organisch modifizierte Silan Aminoethylaminopropylsilsesquioxan oder 2-Aminoethyl-3-aminopropylsilantriol ist.

5. Maschinenkomponente nach einem der Ansprüche 1-4, wobei die zweite Beschichtungsschicht eine Dicke in dem Bereich von 25-500 nm aufweist.

6. Maschinenkomponente nach einem der Ansprüche 1-7, wobei die anorganische Schutzbeschichtungszusammensetzung Manganphosphat umfasst.

7. Verfahren zur Herstellung einer Beschichtung auf wenigstens einem Teil einer ersten tribologischen Oberfläche einer ersten Maschinenkomponente, die dafür ausgelegt ist, sich während des Maschinenbetriebs mit einer zweiten tribologischen Oberfläche einer anderen Maschinenkomponente in Kontakt zu befinden, wobei das Verfahren die Schritte umfasst:
(a) Aufbringen einer ersten Beschichtungsschicht auf wenigstens einen Teil der ersten tribologischen Oberfläche, wobei die erste Beschichtungsschicht eine anorganische Schutzbeschichtungszusammensetzung umfasst, die eine chemisch hergestellte Beschichtungszusammensetzung ist, die ein oder mehrere Eisenoxide oder Manganphosphat umfasst, und wobei sich die erste Beschichtung in direktem Kontakt mit wenigstens einem Teil der ersten tribologischen Schicht befindet;
(b) Aufbringen einer zweiten Beschichtungsschicht auf wenigstens einen Teil der ersten Beschichtungsschicht, wobei die zweite Beschichtungsschicht ein organisch modifiziertes Silan umfasst, das eine oder mehrere Amingruppen enthält, und wobei sich die zweite Beschichtungsschicht in direktem Kontakt mit wenigstens einem Teil der ersten Beschichtungsschicht befindet; und
(c) Härtenlassen der zweiten Beschichtung.

8. Verfahren nach Anspruch 7, wobei bei Schritt (b) das organisch modifizierte Silan in der Form einer wässrigen Lösung auf wenigstens einen Teil der ersten Beschichtungsschicht aufgebracht wird.

9. Verfahren nach Anspruch 7 oder 8, wobei das organisch modifizierte Silan ausgewählt ist aus der Gruppe bestehend aus Aminoethylsilsesquioxan, Aminoethylaminopropylsilsesquioxan und 2-Aminoethyl-3-aminopropylsilantriol.

10. Verfahren nach Anspruch 9, wobei das organisch modifizierte Silan Aminoethylaminopropylsilsesquioxan oder 2-Aminoethyl-3-aminopropylsilantriol ist.

11. Verfahren nach einem der Ansprüche 7-10, wobei die anorganische Schutzbeschichtungszusammensetzung Manganphosphat umfasst.

12. Verwendung einer Beschichtung auf wenigstens einem Teil einer ersten tribologischen Oberfläche einer ersten Maschinenkomponente zum Schutz der ersten Maschinenkomponente, wobei die erste tribologische Oberfläche dafür ausgelegt ist, sich während des Maschinenbetriebs mit einer zweiten tribologischen Oberfläche einer anderen Maschinenkomponente in Kontakt zu befinden, wobei die Beschichtung eine erste Beschichtungsschicht und eine zweite Beschichtungsschicht umfasst, wobei die erste Beschichtungsschicht eine anorganische Schutzbeschichtungszusammensetzung umfasst, die eine chemisch hergestellte Beschichtungszusammensetzung ist, die ein oder mehrere Eisenoxide oder Manganphosphat umfasst, und die zweite Beschichtungsschicht ein organisch modifiziertes Silan umfasst, das eine oder mehrere Amingruppen enthält, wobei sich die erste Beschichtungsschicht in direktem Kontakt mit wenigstens einem Teil der ersten tribologischen Oberfläche befindet, und wobei sich die zweite Beschichtungsschicht in direktem Kontakt mit wenigstens einem Teil der ersten Beschichtungsschicht befindet.

13. Verwendung nach Anspruch 12 bei Walzanwendungen, wobei die erste tribologische Oberfläche dafür ausgelegt ist, sich während des Maschinenbetriebs in Walzkontakt mit der zweiten tribologischen Oberfläche zu befinden, und wobei die anorganische Schutzbeschichtungszusammensetzung Manganphosphat umfasst.

## Revendications

1. Composant de machine ayant une première surface tribologique, laquelle première surface tribologique, pendant le fonctionnement de la machine, est adaptée pour être en contact avec une deuxième surface tribologique d'un autre composant de machine, dans lequel au moins une partie de la première surface tribologique est recouverte par un revêtement qui comprend une première couche de revêtement et une deuxième couche de revêtement, dans lequel la première couche de revêtement comprend une composition de revêtement protecteur inorganique qui est une composition de revêtement produite chimiquement qui comprend de l'oxyde noir ou du phosphate de manganèse et la deuxième couche de revêtement comprend une composition de silane organiquement modifié, dans lequel le silane organiquement modifié utilisé dans la composition de silane organiquement modifié contient un ou plusieurs groupes amine, la première couche de revêtement étant en contact direct avec au moins une partie de la première surface tribologique, et dans lequel la deuxième couche de revêtement est en contact direct avec au moins une partie de la première couche de revêtement.

2. Composant de machine selon la revendication 1, dans lequel le silane organiquement modifié utilisé dans la composition de silane organiquement modifié est soluble dans l'eau.

3. Composant de machine selon la revendication 1 ou 2, dans lequel le silane organiquement modifié est choisi dans le groupe constitué par aminoéthylsilsesquioxane, aminoéthylaminopropylsilsesquioxane et 2-aminoéthyl-3-aminopropyl-silanetriol.

4. Composant de machine selon la revendication 3, dans lequel le silane organiquement modifié est l'aminoéthylaminopropylsilsesquioxane ou le 2-aminoéthyl-3-aminopropyl-silanetriol.

5. Composant de machine selon l'une quelconque des revendications 1 à 4, dans lequel la deuxième couche de revêtement a une épaisseur dans la plage de 25-500 nm.

6. Composant de machine selon l'une quelconque des revendications 1 à 7, dans lequel la composition de revêtement protecteur inorganique comprend du phosphate de manganèse.

7. Procédé de préparation d'un revêtement sur au moins une partie d'une première surface tribologique d'un premier composant de machine qui, pendant le fonctionnement de la machine, est adapté pour être en contact avec une deuxième surface tribologique d'un autre composant de machine, lequel procédé comprend les étapes de :
(a) application d'une première couche de revêtement sur au moins une partie de la première surface tribologique, ladite première couche de revêtement comprenant une composition de revêtement protecteur inorganique qui est une composition de revêtement produite chimiquement et qui comprend un ou plusieurs oxydes de fer ou du phosphate de manganèse, le premier revêtement étant en contact direct avec au moins une partie de la première couche tribologique ;
(b) application d'une deuxième couche de revêtement sur au moins une partie de la première couche de revêtement, laquelle deuxième couche de revêtement comprend un silane modifié organiquement qui contient un ou plusieurs groupes amine, la deuxième couche de revêtement étant en contact direct avec au moins une partie de la première couche de revêtement ; et
(c) le fait de laisser durcir le deuxième revêtement.

8. Procédé selon la revendication 7, dans lequel, dans l'étape (b), le silane modifié organiquement sous la forme d'une solution aqueuse est appliqué sur au moins une partie de la première couche de revêtement.

9. Procédé selon la revendication 7 ou 8, dans lequel le silane organiquement modifié est choisi dans le groupe constitué par l'aminoéthylsilsesquioxane, l'aminoéthylaminopropylsilsesquioxane et le 2-aminoéthyl-3-aminopropyl silanetriol.

10. Procédé selon la revendication 9, dans lequel le silane organiquement modifié est l'aminoéthylaminopropylsilsesquioxane ou le 2-aminoéthyl-3-aminopropyl-silanetriol.

11. Procédé selon l'une quelconque des revendications 7 à 10, dans lequel la composition de revêtement protecteur inorganique comprend du phosphate de manganèse.

12. Utilisation d'un revêtement sur au moins une partie d'une première surface tribologique d'un premier composant de machine pour protéger le premier composant de machine, laquelle première surface tribologique, pendant le fonctionnement de la machine, est adaptée pour être en contact avec une deuxième surface tribologique d'un autre composant de machine, ce revêtement comprend une première couche de revêtement et une deuxième couche de revêtement, la première couche de revêtement comprenant une composition de revêtement protecteur inorganique qui est une composition de revêtement produite chimiquement qui comprend un ou plusieurs oxydes de fer ou du phosphate de manganèse et la deuxième couche de revêtement comprend un silane modifié organiquement qui contient un ou plusieurs groupes amine, la première couche de revêtement étant en contact direct avec au moins une partie de la première surface tribologique, et dans laquelle la deuxième couche de revêtement est en contact direct avec au moins une partie de la première couche de revêtement.

13. Utilisation selon la revendication 12 dans des applications de laminage, dans laquelle la première surface tribologique, pendant le fonctionnement de la machine, est adaptée pour être en contact de laminage avec la deuxième surface tribologique, et dans laquelle la composition de revêtement protecteur inorganique comprend du phosphate de manganèse.
